# EUROPÄISCHE PATENTSCHRIFT

(11) **EP 3 246 778 B1**
(45) Veröffentlichungstag und Bekanntmachung des Hinweises auf die Patenterteilung: **20.12.2023**
(21) Anmeldenummer: 17170589.0
(22) Anmeldetag: 11.05.2017
(51) Int. Cl.: G05B 23/02, B61L 15/00, H04L 12/40, G07C 5/00

(54) **VORRICHTUNG ZUM AUSLESEN VON DATEN AUS EINEM SICHERHEITSKRITISCHEN STEUERGERÄT**
DEVICE FOR READING OUT DATA FROM A SAFETY-CRITICAL CONTROL DEVICE
DISPOSITIF DE LECTURE DE DONNÉES À PARTIR D'UN APPAREIL DE COMMANDE STRATÉGIQUE

(30) Priorität: 17.05.2016 DE 102016108997
(43) Veröffentlichungstag der Anmeldung: 22.11.2017
(73) Patentinhaber: KNORR-BREMSE Systeme für Schienenfahrzeuge GmbH, 80809 München (DE)
(72) Erfinder: BEHMANN, Benjamin, 81541 München (DE); HÄBEL, Markus, 66540 Neunkirchen (DE)

(56) Entgegenhaltungen:
- WO-A1-2008/095511
- WO-A1-2008/128710
- WO-A1-2016/041756
- GB-A- 2 430 585
- US-B1- 6 434 512

## Beschreibung

Die Erfindung betrifft eine Vorrichtung zum Auslesen von Daten aus einem sicherheitskritischen Steuergerät. Die Erfindung betrifft ferner ein Diagnose- und Instandhaltungssystem, das eine Vorrichtung zum Auslesen von Daten aus einem sicherheitskritischen Steuergerät aufweist.

Aus Steuergeräten, die technische Systeme steuern, regeln und/oder überwachen, müssen für verschiedene Anwendungsfälle Betriebs- und/oder Prozessparameter ausgelesen werden, die in außerhalb der Steuergeräte angeordneten Diagnosesystemen, Instandhaltungssystemen oder Ähnlichem verarbeitet werden, um beispielsweise im Rahmen einer Diagnose einen Systemzustand des technischen Systems, beispielsweise einen Verschleißzustand, zu ermitteln, oder Wartungsempfehlungen für Instandhaltungsmaßnahmen auszugeben.

Handelt es sich bei dem Steuergerät, aus dem die Daten auszulesen sind, um ein sicherheitskritisches Steuergerät, so besteht die Gefahr, dass über die Datenverbindung, die zum Auslesen der Daten aus dem Steuergerät genutzt wird, in unbefugter Weise beispielsweise schreibend oder befehlend auf das Steuergerät zugegriffen wird. Dadurch kann es ermöglicht werden, in unbefugter Weise das sicherheitskritische Steuergerät zu manipulieren und Eingriffe vorzunehmen, die der Sicherheit des technischen Systems abträglich sein können. So kann beispielsweise durch einen unbefugten Zugriff auf ein Bremssteuergerät eine unerwünschte Bremsung eines Schienenfahrzeugs auf einer Strecke ausgelöst werden. Durch unbefugte Zugriffe auf sicherheitskritische Steuergeräte sind darüber hinaus noch weitaus schädigendere Eingriffe als das genannte Beispiel denkbar, die daher aus Sicherheitsgründen unbedingt verhindert werden müssen.

Die Schnittstellen, über die auf das Steuergerät zugegriffen werden kann, und damit auch die Schnittstellen, aus denen für Wartungs- und Diagnosezwecke Betriebs- und Prozessparameter aus dem sicherheitskritischen Steuergerät ausgelesen werden können, sind daher so zu gestalten, dass über sie ein befehlender oder schreibender Zugriff auf das Steuergerät nicht möglich ist.

In diesem Zusammenhang offenbart die GB 2 430 585 die Verwendung eines Gateways für eine Verbindungskomponente zum Schutz eines Bussystems, der den Austausch von Signale zwischen einer externen und einer internen Schnittstelle begrenzt, wobei zumindest ein Signal zwischen diesen Schnittstellen ohne Beschränkung passieren kann.

Die WO 2008/095511 A1 offenbart eine Gateway-Vorrichtung, die Bus-Nachrichten von einem Kraftfahrzeug weiter an eine Diagnose-Vorrichtung überträgt. Die Gateway-Vorrichtung nimmt eine Identitätsprüfung bzw. Authentifizierungsprüfung der Diagnose-Vorrichtung vor, um zu ermitteln, ob die Diagnose-Vorrichtung als berechtigt gilt. Sofern eine Berechtigung vorliegt erfolgt ein uneingeschränkter Zugriff.

Ein uneingeschränkter Zugriff von einem Kontrollzentrum auf eine Komponente wird zudem in der WO 2016/041756 A1 offenbart. Über eine Auswerteeinrichtung können vom Kontrollzentrum an diese gesandte Instruktionen, Daten und/oder Softwaremodule auch solche Instruktionen, Daten und/oder Softwaremodule beinhalten, welche die bestimmungsgemäße Funktion der Komponente betreffen. Mit anderen Worten wird dadurch auch die Software, durch welche die betreffende Komponente im Hinblick auf ihre bestimmungsgemäße Funktion gesteuert oder geregelt wird, ergänzt, verändert oder angepasst.

Die WO 2008/128710 A1 betrifft eine Steuervorrichtung für Fahrzeuge, insbesondere zur Steuerung von Fahrzeugsicherheitseinrichtungen, mit mindestens zwei Steuermitteln, die jeweils mit mindestens einem gemeinsamen Betriebsmittel kommunizieren, wobei die Steuermittel mit einem Kontrollmittel verbunden sind, das die Kommunikation jedes Steuermittels mit dem gemeinsamen Betriebsmittel sowie mit einem Betriebsmittel, das mit einem anderen Steuermittel direkt verbunden ist, überwacht.

Es ist daher die Aufgabe der vorliegenden Erfindung, eine Vorrichtung bereitzustellen, mit der verhindert werden kann, dass beim Auslesen von Betriebs- und Prozessdaten, die für Diagnose- und Wartungszwecke benötigt werden, auf ein sicherheitskritisches Steuergerät befehlend oder schreibend zugegriffen werden kann.

Diese Aufgabe wird durch eine Vorrichtung zum Auslesen von Daten aus einem sicherheitskritischen Steuergerät mit den Merkmalen des Anspruchs 1 sowie durch ein Diagnose- und Instandhaltungssystem mit den Merkmalen des Anspruchs 8 gelöst. Weitere Merkmale der Erfindung ergeben sich aus den Unteransprüchen.

In einer erfindungsgemäßen Vorrichtung zum Auslesen von Daten aus einem sicherheitskritischen Steuergerät weist die Vorrichtung ein Zusatzsteuergerät auf, das mit jeweils einem sicherheitskritischen Steuergerät verbindbar ist und so gestaltet ist, dass es die für Diagnose- und Wartungszwecke benötigte Betriebs- und Prozessdaten aus dem sicherheitskritischen Steuergerät auslesen kann. Das Zusatzsteuergerät weist eine erste Kommunikationsschnittstelle auf, mit der durch das Zusatzsteuergerät Daten aus dem sicherheitskritischen Steuergerät ausgelesen werden können. Das Zusatzsteuergerät weist ferner eine zweite Kommunikationsschnittstelle auf, mit der die Betriebs- und Prozessdaten zwischen dem Zusatzsteuergerät und Peripheriegeräten übertragbar sind. Das Zusatzsteuergerät weist ein Softwaremodul auf, das dabei so gestaltet ist, dass es das Übertragen von Befehlen und Schreibanforderungen zum sicherheitskritischen Steuergerät über die erste Kommunikationsschnittstelle verhindern kann.

Ein sicherheitskritisches Steuergerät ist ein Steuergerät, das ein sicherheitskritisches technisches System steuert, regelt und/oder überwacht. Das Steuergerät erfasst dabei in der Regel über Sensoren Meßsignale vom technischen System, verarbeitet diese und steuert bzw. regelt das technische System über Aktuatoren, die das Systemverhalten beeinflussen können, bzw. es überwacht das technische System. Handelt es sich um ein ausschließlich ein technisches System überwachendes Steuergerät, so wird in der Regel lediglich mittels Sensoren der Zustand des technischen Systems erfasst, ein steuernder oder regelnder Eingriff unterbleibt jedoch zumeist.

Sicherheitskritisch ist das technische System insbesondere dann, wenn ein Fehlverhalten des technischen Systems zu schwerwiegenden Auswirkungen, beispielsweise Beschädigungen, Personenschäden etc. führen kann. Da das Steuergerät das technische System beeinflusst und damit das Verhalten des Steuergeräts maßgeblichen Einfluss auf das Verhalten des sicherheitskritischen technischen Systems hat, wird auch das Steuergerät selbst zu einem sicherheitskritischen Bauteil. Neben einer geforderten Zuverlässigkeit und Ausfallsicherheit ist dabei insbesondere zu vermeiden, dass von außen manipulierend auf das sicherheitskritische Steuergerät zugegriffen werden kann, beispielsweise durch Schreib- oder Befehlszugriffe auf das Steuergerät, mit denen das Verhalten des technischen Systems in unerwünschter Weise manipuliert werden könnte.

In der erfindungsgemäßen Vorrichtung zum Auslesen von Daten aus dem sicherheitskritischen Steuergerät weist die Vorrichtung ein Zusatzsteuergerät auf, das mit dem sicherheitskritischen Steuergerät verbindbar ist. Verbindbarkeit bedeutet hier insbesondere, dass eine Datenverbindung zwischen dem Zusatzsteuergerät und dem sicherheitskritischen Steuergerät hergestellt werden kann, und gegebenenfalls auch ein Energieaustausch zwischen Zusatzsteuergerät und sicherheitskritischem Steuergerät hergestellt werden kann, soweit das Zusatzsteuergerät keine separate Energieversorgung aufweist. Das Zusatzsteuergerät ist vorzugsweise ein separates Steuergerät, das nicht in einer Baueinheit mit dem sicherheitskritischen Steuergerät ausgebildet ist. Jedoch kann das Zusatzsteuergerät auch so ausgestaltet sein, dass es in das sicherheitskritische Steuergerät eingebaut oder am sicherheitskritischen Steuergerät befestigt werden kann.

Über die erste Kommunikationsschnittstelle des Zusatzsteuergerätes können Daten zwischen dem sicherheitskritischen Steuergerät und dem Zusatzsteuergerät übertragen werden. Die erste Kommunikationsschnittstelle bildet somit eine, vorzugweise die einzige Datenverbindung zwischen dem sicherheitskritischen Steuergerät und dem Zusatzsteuergerät. Daten können dabei zumindest vom sicherheitskritischen Steuergerät zum Zusatzsteuergerät übertragen werden. Dabei können durch das Zusatzsteuergerät insbesondere Daten aus dem sicherheitskritischen Steuergerät ausgelesen werden. Eine Datenübertragung kann jedoch auch in beiden Richtungen möglich sein, beispielsweise dann, wenn eine Datenübertragung vom sicherheitskritischen Steuergerät zum Zusatzsteuergerät eine vorherige Anfrage des Zusatzsteuergeräts an das sicherheitskritische Steuergerät erfordert.

Über die erste Kommunikationsschnittstelle kann das Zusatzsteuergerät Daten aus dem sicherheitskritischen Steuergerät auslesen. Dabei handelt es sich in der vorliegenden Erfindung insbesondere um Betriebs- und Prozessdaten, die benötigt werden, um den Zustand des vom sicherheitskritischen Steuergerät überwachten oder gesteuerten technischen Systems überwachen und diagnostizieren zu können und/oder Instandhaltungsempfehlungen und -informationen abzuleiten. Damit kann der Datenumfang, der über die erste Kommunikationsschnittstelle durch das Zusatzsteuergerät aus dem sicherheitskritischen Steuergerät ausgelesen werden kann, gegenüber dem gesamten im sicherheitskritischen Steuergerät enthaltenen Datenumfang bereits von vornherein eingeschränkt werden. Beispielsweise kann ein Speicherbereich des sicherheitskritischen Steuergeräts, auf das das Zusatzsteuergerät lesend zugreifen kann, eingeschränkt sein. Dadurch können unerwünschte Zugriffe auf das sicherheitskritische Steuergerät bzw. auf sicherheitskritische Bereiche im Steuergerät bereits von vornherein eingeschränkt werden. Wie vorstehend ausgeführt, kann es je nach verwendeter Kommunikationsschnittstelle erforderlich sein, dass auch Daten vom Zusatzsteuergerät an das sicherheitskritische Steuergerät gesendet werden, beispielsweise Anfragen, auf die hin das sicherheitskritische Steuergerät Datenpakete, die die angefragten Informationen enthalten, an das Zusatzsteuergerät übermittelt.

Über die zweite Kommunikationsschnittstelle des Zusatzsteuergeräts kann das Zusatzsteuergerät Daten zwischen dem Zusatzsteuergerät und Peripheriegeräten übertragen. Peripheriegeräte können beispielsweise Server zum Speichern von Daten sein, oder Auswerteeinheiten, die die aus dem sicherheitskritischen Steuergerät ausgelesenen Daten verarbeiten und daraus beispielsweise Diagnoseinformationen oder Instandhaltungsempfehlungen ableiten. Das Zusatzsteuergerät und das sicherheitskritische Steuergerät bilden dabei einen sicherheitskritischen Bereich, und Daten aus dem sicherheitskritischen Bereich heraus werden über die zweite Kommunikationsschnittstelle an eine nicht sicherheitskritische Umgebung übertragen.

Das Zusatzsteuergerät kann dabei auch die über die erste Kommunikationsschnittstelle vom sicherheitskritischen Steuergerät zum Zusatzsteuergerät übertragenen Datenformate oder Protokolle in andere, über die zweite Kommunikationsschnittstelle zu den Peripheriegeräten übertragene Datenformate oder Datenprotokolle übersetzen. Die Einheit aus sicherheitskritischem Steuergerät und Zusatzsteuergerät dient zum Kapseln des sicherheitskritischen Bereichs vom Bereich, in dem keine sicherheitskritischen Funktionen laufen.

Dadurch, dass das Zusatzsteuergerät so gestaltet ist, dass es das Übertragen von Befehlen und Schreibanforderungen zum sicherheitskritischen Steuergerät verhindern kann, können Manipulationen des sicherheitskritischen Steuergerätes von außen über die Schnittstellen, die zum Auslesen diagnose- und wartungsrelevanter Betriebs- und Prozessdaten aus dem sicherheitskritischen Steuergeräts genutzt werden, wirksam verhindert werden. Das Zusatzsteuergerät dient damit als Sicherheitsschleuse, so dass lediglich Anfragen betreffend Betriebs- und Prozessdaten, die eine Diagnose oder Wartung des sicherheitskritischen Systems betreffen, durchgelassen werden, während sämtliche Befehle und Schreibanforderungen, die zu einer Manipulation des sicherheitskritischen Steuergerätes genutzt werden könnten, unterbunden werden. Eine im Sinne der Erfindung ausgebildete Vorrichtung zum Auslesen von Daten aus einem sicherheitskritischen Steuergerät zeichnet sich daher dadurch aus, dass aus dem sicherheitskritischen Steuergerät Daten, insbesondere Daten, die für Diagnose- und Instandhaltungszwecke benötigt werden, ausgelesen werden können, während ein manipulierender Zugriff auf das sicherheitskritische Steuergerät wirksam unterbunden wird, so dass das sicherheitskritische technische System nicht von außen in unerwünschter Weise beeinflusst werden kann.

Erfindungsmemäß ist das Zusatzsteuergerät so gestaltet, dass es die für Diagnose- und Wartungszwecke benötigten Betriebs- und Prozessdaten aus dem sicherheitskritischen Steuergerät auslesen kann. Der Lesezugriff des Zusatzsteuergerätes auf das sicherheitskritische Steuergerät kann damit von vornherein so eingeschränkt werden, dass aus dem sicherheitskritischen Steuergerät ausschließlich für die Diagnose- und/oder Wartungszwecke benötigten Betriebs- und Prozessdaten ausgelesen werden können. Dadurch kann verhindert werden, dass über die Kommunikationsschnittstelle zwischen dem Zusatzsteuergerät und dem sicherheitskritischen Steuergerät ein Zugriff auf sicherheitskritische Bereiche des sicherheitskritischen Steuergerätes vorgenommen wird und beispielsweise Befehls- oder Schreibanforderungen an das sicherheitskritische Steuergerät übertragen werden, durch die sicherheitskritische Bereiche des Steuergeräts in unerwünschter Weise manipuliert werden könnten.

In einer weiteren Ausgestaltung der Vorrichtung ist die erste Kommunikationsschnittstelle eine serielle Schnittstelle. Dadurch kann zwischen dem sicherheitskritischen Steuergerät und dem Zusatzsteuergerät über eine serielle Schnittstelle kommuniziert und Daten, insbesondere für Diagnose- und/oder Wartungszwecke benötigte Betriebs- und Prozessdaten, übertragen werden. Als serielle Schnittstelle kann beispielsweise eine RS-232-Schnittstelle genutzt werden. Diese hat den Vorteil, dass sie eine standardisierte Schnittstelle ist, die an vielen Steuergeräten verfügbar ist. Dadurch kann das Zusatzsteuergerät an den meisten Steuergeräten angeschlossen werden, und es kann auch an bestehenden Steuergeräten nachgerüstet werden. Alternativ können für die Kommunikation zwischen Zusatzsteuergerät und sicherheitskritischem Steuergerät aber auch eine parallele Schnittstelle oder eine andere Art der Kommunikationsverbindung, beispielsweise übliche Bussysteme, verwendet werden.

In einer weiteren, besonders vorteilhaften Ausgestaltung der Erfindung kann das Zusatzsteuergerät an einem bestehenden sicherheitskritischen Steuergerät nachgerüstet werden. Dies ist insbesondere dann möglich, wenn das sicherheitskritische Steuergerät eine standardisierte Kommunikationsschnittstelle aufweist, mittels der eine Verbindung mit dem Zusatzsteuergerät hergestellt werden kann, ohne insbesondere hardwareseitige Eingriffe in das sicherheitskritische Steuergerät zu erfordern. Durch die Nachrüstung eines bestehenden sicherheitskritischen Steuergerätes mit einem Zusatzsteuergerät können entweder nachträglich Diagnose- oder Wartungssysteme vorgesehen werden, die Zugriff auf für Diagnose- oder Wartungszwecke benötigte Betriebs- und Prozessdaten des sicherheitskritischen Steuergerätes benötigen, oder bestehende Systeme können im Zuge einer sicherheitsverbessernden Nachrüstung so erweitert werden, dass nach der Erweiterung ein manipulierender Zugriff auf das sicherheitskritische Steuergerät noch besser verhindert werden kann.

In einer weiteren Ausgestaltung der Vorrichtung weist das Zusatzsteuergerät eine elektronische Baugruppe auf, die Mikrocontroller, Speicher und/oder Schnittstellen aufweist. Damit besteht das Zusatzgerät aus einer kleinen elektronischen Baugruppe mit entsprechenden Schnittstellen zum Steuergerät.

Erfindungsgemäß weist das Zusatzsteuergerät ein Softwaremodul auf, das das Übertragen von Befehlen oder Schreibanforderungen zum sicherheitskritischen Steuergerät verhindern kann. Damit wird die Sicherung des sicherheitskritischen Steuergerätes vor unbefugten Eingriffen von außen durch ein Softwaremodul im Zusatzsteuergerät sichergestellt. Das Softwaremodul kann so gestaltet sein, dass es berechtigte Anfragen, beispielsweise zur Datenübertragung vom sicherheitskritischen Steuergerät, von unberechtigten, beispielsweise schreibenden oder befehlenden Anforderungen unterscheidet.

In einer weiteren, besonders vorteilhaften Ausgestaltung der Vorrichtung ist das Zusatzsteuergerät so gestaltet, dass bei Ausfall oder Manipulation die erste Kommunikationsschnittstelle unterbrochen wird. Wird das Zusatzsteuergerät manipuliert oder fällt es aus anderen Gründen aus, wird somit die Kommunikation zwischen Zusatzsteuergerät und sicherheitskritischem Steuergerät unterbrochen. Dadurch kann bei Manipulation wirksam verhindert werden, dass ein Zugriff auf das sicherheitskritische Steuergerät mit Hilfe eines manipulierten Zusatzsteuergeräts möglich ist. Das Zusatzsteuergerät kann dafür beispielsweise mit einer Erkennung ausgestattet werden, anhand derer sich Manipulationsversuche am Zusatzsteuergerät erkennen lassen. Somit ist bei einer Manipulation sichergestellt, dass keine Möglichkeit für unberechtigte Dritte besteht, einen Zugriff auf das sicherheitskritische Steuergerät zu erlangen und dieses ebenfalls in unerwünschter Weise zu manipulieren. Das sicherheitskritische Steuergerät ist dadurch gegen Manipulationsversuche von außen zuverlässig abgeschirmt.

In einer weiteren vorteilhaften Ausgestaltung der Vorrichtung ist das Zusatzsteuergerät so gestaltet, dass nach Ausfall oder Manipulation eine Wiederinbetriebnahme nur durch Austausch des Zusatzsteuergeräts oder durch manuelles Zurücksetzen des Zusatzsteuergeräts möglich ist. Eine Wiederinbetriebnahme kann damit nur manuell erfolgen, d.h. durch einen physischen Tausch des Zusatzsteuergeräts oder durch einen manuellen Reset am Zusatzsteuergerät. Eine Wiederinbetriebnahme kann damit nicht durch einen reinen Softwarebefehl über Fernsteuerung vorgenommen werden. Dies stellt sicher, dass im Fall von Manipulationsversuchen des Zusatzsteuergerätes keine Manipulation erfolgen kann, mit der es möglich ist, Zugriff auf das sicherheitskritische Steuergerät zu erlangen. Es ist ein direkter Zugang zum Zusatzsteuergerät erforderlich, um den Ausfall oder ein Abschalten des Zusatzsteuergerätes nach einem Manipulationsversuch rückgängig zu machen. Somit können unberechtigte Dritte nicht durch Ferneingriffe versuchen, auf das sicherheitskritische Steuergerät manipulierend zuzugreifen.

Ein erfindungsgemäßes Diagnose- und Instandhaltungssystem weist wenigstens eine erfindungsgemäße Vorrichtung zum Auslesen von Daten aus einem sicherheitskritischen Steuergerät auf, wie sie vorstehend beschrieben wurde, wobei das Zusatzsteuergerät der wenigstens einen Vorrichtung über seine zweite Kommunikationsschnittstelle mit einem Server verbunden ist, und wobei der Server mit einer Rechnereinheit verbunden ist, wobei Betriebs- und Prozessdaten aus wenigstens einem sicherheitskritischen Steuergerät über das wenigstens eine Zusatzsteuergerät und den Server zur Rechnereinheit übertragbar sind, und wobei die Rechnereinheit so gestaltet ist, dass sie die Betriebs- und Prozessdaten des wenigstens einen sicherheitskritischen Steuergeräts auswerten kann, um einen Verschleißzustand eines vom sicherheitskritischen Steuergerät gesteuerten und/oder überwachten technischen Systems zu ermitteln und/oder prädiktive Instandhaltungsmeldungen zu erzeugen.

Ein Diagnose- und Instandhaltungssystem ist somit ein Gesamtsystem, das es ermöglicht, Betriebs- und Prozessdaten aus wenigstens einem sicherheitskritischen Steuergerät auszulesen, diese zu übertragen, abzuspeichern und zu verarbeiten und mit diesen Daten einen Verschleißzustand eines vom sicherheitskritischen Steuergerät gesteuerten und/oder überwachten technischen Systems zu ermitteln und/oder prädiktive Instandhaltungsmeldungen zu erzeugen. Die erfindungsgemäße Vorrichtung zum Auslesen von Daten aus einem sicherheitskritischen Steuergerät ist damit Bestandteil des Diagnose- und Instandhaltungssystems, da sie dazu dient, Daten aus einem sicherheitskritischen Steuergerät auszulesen und gleichzeitig einen beschreibenden, einen unberechtigten schreibenden und/oder befehlenden Zugriff auf das sicherheitskritische Steuergerät zu verhindern. Die erfindungsgemäße Vorrichtung zum Auslesen von Daten aus einem sicherheitskritischen Steuergerät, ein Zusatzsteuergerät aufweisend, ist daher im Diagnose- und Instandhaltungssystem so ausgestaltet, wie sie vorstehend beschrieben wurde.

Neben der ersten Kommunikationsschnittstelle, mit der das Zusatzsteuergerät des erfindungsgemäßen Diagnose- und Instandhaltungssystems mit einem sicherheitskritischen Steuergerät verbindbar ist und Daten zwischen dem sicherheitskritischen Steuergerät und dem wenigstens einen Zusatzsteuergerät übertragbar sind, weist das wenigstens eine Zusatzsteuergerät des Diagnose- und Instandhaltungssystems eine zweite Kommunikationsschnittstelle auf, mit der Daten zwischen dem Zusatzsteuergerät und Peripheriegeräten, hier mit einem Server, übertragbar sind. Der Server kann dabei ein Terminalserver sein, der den Knoten zu den einzelnen Zusatzsteuergeräten bildet. Zudem kann der Terminalserver als Übersetzer bzw. Konverter, der den ankommenden Datenstrom von einem Datenübertragungsprotokoll in ein anderes übersetzt, dienen. Die Benennung des Servers kann jedoch auch unterschiedlich lauten. Gemeinsam ist allen Bestandteilen, dass es sich um elektronische Baugruppen handelt, die die notwendigen Schnittstellen nach außen aufweisen.

Der Server ist im erfindungsgemäßen Diagnose- und Instandhaltungssystem mit einer Rechnereinheit verbunden. Die Rechnereinheit liest Daten vom Server, auf dem die Daten gespeichert werden können, aus und verarbeitet diese. Die Rechnereinheit ist dabei so ausgebildet, dass sie die Betriebs- und Prozessdaten des wenigstens einen sicherheitskritischen Steuergeräts auswerten kann. Die Rechnereinheit enthält dafür Algorithmen, mit denen ein Verschleißzustand eines technischen Systems, das vom sicherheitskritischen Steuergerät gesteuert und/oder überwacht wird, ermittelt werden kann. Die Rechnereinheit kann des Weiteren auch so gestaltet sein, dass sie prädiktive Instandhaltungsmeldungen erzeugen kann. Dies sind Wartungsempfehlungen, beispielsweise Empfehlungen, zu welchem Zeitpunkt und/oder in welchem Umfang eine Wartung durchgeführt werden soll. Die Rechnereinheit und der Server können als getrennte Baugruppen, aber auch als ein einziges Gerät ausgebildet werden. Mit dem erfindungsgemäßen Diagnose- und Instandhaltungssystem können Steuergeräte auf Schienenfahrzeugen per serieller, aber auch per paralleler Schnittstelle ausgelesen werden, wobei gleichzeitig ein unerwünschter Zugriff auf die Steuergeräte sicher verhindert werden kann.

In einer besonders vorteilhaften Ausgestaltung des Diagnose- und Instandhaltungssystems ist das Diagnose- und Instandhaltungssystem so gestaltet, dass es in einem Schienenfahrzeug oder in einem Lastkraftwagen angeordnet werden kann, und es ist ferner so gestaltet, dass es eine Schnittstelle für drahtlose Kommunikation aufweist, über die der Verschleißzustand und/oder die prädiktiven Instandhaltungsmeldungen an die Umgebung des Schienenfahrzeugs und/oder des Lastkraftwagens übermittelt werden können. Somit ist es möglich, insbesondere die durch die Rechnereinheit ermittelten Verschleißzustände oder die Wartungsempfehlungen, falls erforderlich aber auch die gesamten Daten aus dem sicherheitskritischen Steuergerät, per drahtloser Kommunikation an die Umgebung des Fahrzeuges, in dem das Diagnose- und Instandhaltungssystem angeordnet ist, zu übertragen. Mit diesen Daten kann dann beispielsweise ein stationäres Konfigurationssystem, eine Flottendatenbank oder ein System zur zustandsorientierten Instandhaltung mit Diagnose-, Instandhaltungs-, Prozess- und Betriebsdaten gespeist werden.

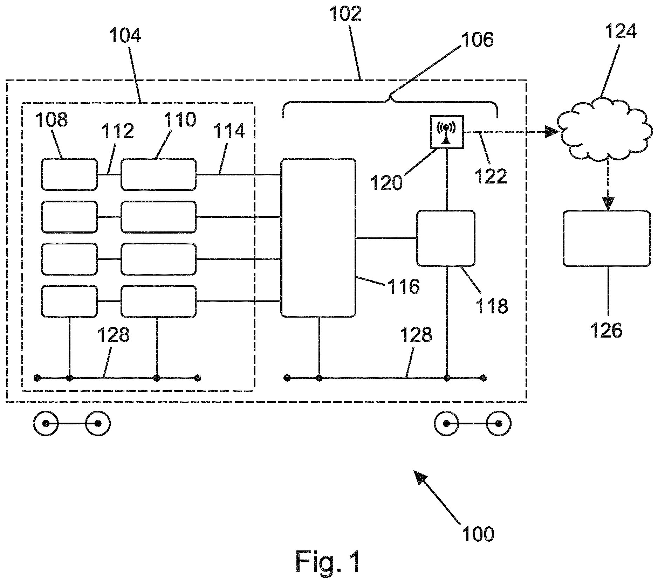

Ein Ausführungsbeispiel der erfindungsgemäßen Vorrichtung wird nachfolgend anhand der beigefügten Zeichnung beschrieben. Darin zeigt die einzige Figur 1 den schematischen Aufbau eines in einem Fahrzeug angeordneten erfindungsgemäßen Diagnose- und Instandhaltungssystems, das mehrere erfindungsgemäße Vorrichtungen zum Auslesen von Daten aus einem sicherheitskritischen Steuergerät aufweist, die ihrerseits wiederum Zusatzsteuergeräte aufweisen.

In einem in **Fig. 1** dargestellten Fahrzeug 100, hier einem Schienenfahrzeug, ist ein erfindungsgemäßes Diagnose- und Instandhaltungssystem 102 angeordnet. Sicherheitskritische Steuergeräte 108 steuern, regeln und überwachen technische Systeme des Fahrzeugs 100. Sicherheitskritische Steuergeräte 108 können beispielsweise für Türsteuerungen, Bremsteuerungen oder andere sicherheitskritische Teilsysteme des Schienenfahrzeugs vorgesehen sein.

Die sicherheitskritischen Steuergeräte 108 sind in dem in Fig. 1 gezeigten Ausführungsbeispiel über erste Kommunikationsschnittstellen 112 mit jeweils einem Zusatzsteuergerät 110, das jeweils einem sicherheitskritischen Steuergerät 108 zugeordnet ist, verbunden. Durch die erste Kommunikationsschnittstelle 112 können Daten zwischen dem jeweiligen sicherheitskritischen Steuergerät 108 und dem jeweiligen Zusatzsteuergerät 110 übertragen werden. Dadurch können Betriebs- und Prozessparameter, die beispielsweise für eine Diagnose- und Verschleißermittlung der von den sicherheitskritischen Steuergeräten 108 gesteuerten Teilsysteme benötigt werden, vom jeweiligen sicherheitskritischen Steuergerät 108 über die erste Kommunikationsschnittstelle 112 zum zugeordneten Zusatzsteuergerät 110 übertragen werden. Gleichzeitig verhindert das Zusatzsteuergerät 110, dass von außen über die erste Kommunikationsschnittstelle 112 auf das zugeordnete sicherheitskritische Steuergerät 108 unbefugt schreibend oder befehlend zugegriffen wird. Sicherheitskritische Steuergeräte 108, Zusatzsteuergeräte 110 und die zwischen diesen angeordneten ersten Kommunikationsschnittstellen bilden einen sicherheitskritischen Bereich 104.

Die Kommunikation aus dem sicherheitskritischen Bereich 104 heraus zu einem nicht sicherheitskritischen Bereich 106 erfolgt durch zweite Kommunikationsschnittstellen 114, die zwischen den Zusatzsteuergeräten 110 und einem Server 116 angeordnet sind. Der Server 116 ist bereits Bestandteil des nicht sicherheitskritischen Bereichs 106. Manipulationen des Servers 116 können sich aufgrund der Schutzfunktion der Zusatzsteuergeräte 110 nicht auf die sicherheitskritischen Steuergeräte 108 auswirken.

Die von den sicherheitskritischen Steuergeräten 108 über die ersten Kommunikationsschnittstellen 112, die Zusatzsteuergeräte 110 und die zweiten

Kommunikationsschnittstellen 114 zum Server 116 übertragenen Betriebs- und Prozessparameter werden im Server 116 zwischengespeichert. Der Server 116 dient des Weiteren dazu, die Nachrichtenformate zu konvertieren, wenn in der zweiten Kommunikationsschnittstelle 114 zwischen den Zusatzsteuergeräten 110 und dem Server 116 ein anderes Datenformat oder Busprotokoll verwendet wird als in der Kommunikation zwischen dem Server 116 und diesem nachgelagerten Auswerteeinheiten.

Auf dem Server 116 werden die Betriebs- und Prozessparameter zwischengespeichert und können von einer Rechnereinheit 118 zur Auswertung abgerufen werden. Die Rechnereinheit 118 wertet die Betriebs- und Prozessparameter der sicherheitskritischen Steuergeräte 108 für die einzelnen Teilsysteme des Fahrzeugs 100 aus und ermittelt aus diesen beispielsweise den jeweiligen Verschleißzustand und gibt Wartungsempfehlungen ab.

Die ausgewerteten Daten werden mittels eines Senders 120 über eine drahtlose Kommunikation an die Fahrzeugumgebung, d.h. an stationäre Weiterverarbeitungssysteme übertragen. Im in Fig. 1 dargestellten Beispiel werden die Daten aus der drahtlosen Kommunikation beispielsweise in einer Datenablage 124 zwischengespeichert und durch eine Ausgabeeinheit 126 an Benutzer, beispielsweise über graphische Oberflächen, Tabellen oder Ähnliches, ausgegeben. Dabei kann es sich um ein Konfigurationssystem, um eine Flottendatenbank oder um ein System zur zustandsorientierten Instandhaltung handeln, das in der erfindungsgemäßen Vorrichtung mit Prozess- und Betriebsdaten bzw. mit durch Auswertung in der im Fahrzeug 100 befindlichen Rechnereinheit 118 erhaltenen Daten versorgt wird.

Die einzelnen Komponenten des Diagnose- und Instandhaltungssystems 102 werden durch eine Stromversorgung 128 mit elektrischer Energie versorgt, wobei in der in Fig. 1 dargestellten Ausführung des Diagnose- und Instandhaltungssystems für den sicherheitskritischen Bereich 104 und für den nicht sicherheitskritischen Bereich 106 voneinander unabhängige Stromversorgungen 128 vorgesehen sind.

Dadurch ist es möglich, Steuergeräte auf Fahrzeugen, beispielsweise auf Schienenfahrzeugen, von außerhalb des Fahrzeugs auszulesen, um beispielsweise diagnose- oder instandhaltungsrelevante Daten zu erhalten und gleichzeitig einen unbefugten Zugriff von außen auf sicherheitskritische Steuergeräte 108 des Fahrzeugs 100 zuverlässig zu verhindern.

### BEZUGSZEICHENLISTE

- 100: Fahrzeug
- 102: Diagnose- und Instandhaltungssystem
- 104: sicherheitskritischer Bereich
- 106: nicht sicherheitskritischer Bereich
- 108: sicherheitskritisches Steuergerät
- 110: Zusatzsteuergerät
- 112: erste Kommunikationsschnittstelle
- 114: zweite Kommunikationsschnittstelle
- 116: Server
- 118: Rechnereinheit
- 120: Sender
- 122: drahtlose Kommunikation
- 124: Datenablage
- 126: Ausgabeeinheit
- 128: Stromversorgung

## Patentansprüche

1. Vorrichtung zum Auslesen von Daten aus einem sicherheitskritischen Steuergerät (108),
**dadurch gekennzeichnet, dass**
die Vorrichtung ein Zusatzsteuergerät (110) aufweist, das mit jeweils einem sicherheitskritischen Steuergerät (108) verbindbar ist und so gestaltet ist, dass es die für Diagnose- und Wartungszwecke benötigte Betriebs- und Prozessdaten aus dem sicherheitskritischen Steuergerät (108) auslesen kann, wobei
das Zusatzsteuergerät (110) eine erste Kommunikationsschnittstelle (112) aufweist, die eine Datenverbindung zwischen dem sicherheitskritischen Steuergerät (108) und dem Zusatzsteuergerät (110) bildet, und
das Zusatzsteuergerät (110) eine zweite Kommunikationsschnittstelle (114) aufweist, mit der die Betriebs- und Prozessdaten zwischen dem Zusatzsteuergerät (110) und Peripheriegeräten (116) übertragbar sind,
und wobei das Zusatzsteuergerät (110) ein Softwaremodul aufweist, das so gestaltet ist, dass es das Übertragen von Befehlen und Schreibanforderungen zum sicherheitskritischen Steuergerät (108) über die erste Kommunikationsschnittstelle (112) verhindern kann.

2. Vorrichtung nach Anspruch 1,
wobei das Zusatzsteuergerät (110) so gestaltet ist, dass lediglich Anfragen betreffend Betriebs- und Prozessdaten, die eine Diagnose oder Wartung des sicherheitskritischen Systems betreffen, durchgelassen werden.

3. Vorrichtung nach Anspruch 1 oder 2,
wobei die erste Kommunikationsschnittstelle (112) eine serielle Schnittstelle ist.

4. Vorrichtung nach einem der vorangehenden Ansprüche,
wobei das Zusatzsteuergerät (110) mit der ersten Kommunikationsschnittstelle (112) als standardisierte erste Kommunikationsschnittstelle ausgebildet ist, so dass es an einem bestehenden sicherheitskritischen Steuergerät (108) nachrüstbar ist.

5. Vorrichtung nach einem der vorangehenden Ansprüche,
wobei das Zusatzsteuergerät (110) eine elektronische Baugruppe aufweist, die Mikrocontroller, Speicher und/oder Schnittstellen aufweist.

6. Vorrichtung nach einem der vorangehenden Ansprüche,
wobei das Zusatzsteuergerät (110) so gestaltet ist, dass bei Ausfall oder Manipulation des Zusatzsteuergeräts (110) die erste Kommunikationsschnittstelle (112) unterbrochen wird.

7. Vorrichtung nach einem der vorangehenden Ansprüche,
wobei das Zusatzsteuergerät (110) so gestaltet ist, dass nach Ausfall oder Manipulation des Zusatzsteuergeräts (110) eine Wiederinbetriebnahme nur durch Austausch des Zusatzsteuergeräts (110) oder durch manuelles Zurücksetzen des Zusatzsteuergeräts (110) möglich ist.

8. Diagnose- und Instandhaltungssystem (102),
**dadurch gekennzeichnet, dass**
das Diagnose- und Instandhaltungssystem (102) wenigstens eine Vorrichtung nach einem der Ansprüche 1 bis 7 zum Auslesen von Daten aus einem sicherheitskritischen Steuergerät (108) aufweist,
wobei das Zusatzsteuergerät (110) der Vorrichtung über seine zweite Kommunikationsschnittstelle (114) mit einem Server (116) des Diagnose- und Instandhaltungssystems (102) verbunden ist,
und wobei der Server (116) mit einer Rechnereinheit (118) des Diagnose- und Instandhaltungssystems (102) verbunden ist,
wobei Betriebs- und Prozessdaten aus dem wenigstens einen sicherheitskritischen Steuergerät (108) über das Zusatzsteuergerät (110) und den Server (116) zur Rechnereinheit (118) übertragbar sind,
und wobei die Rechnereinheit (118) so gestaltet ist, dass sie die Betriebs- und Prozessdaten des wenigstens einen sicherheitskritischen Steuergeräts (108) auswerten kann, um einen Verschleißzustand eines vom sicherheitskritischen Steuergerät (108) gesteuerten und/oder überwachten technischen Systems zu ermitteln und/oder prädiktive Instandhaltungsmeldungen zu erzeugen.

9. Diagnose- und Instandhaltungssystem (102) nach Anspruch 8,
wobei das Diagnose- und Instandhaltungssystem (102) in einem Schienenfahrzeug (100) oder in einem Lastkraftwagen anordenbar ist, und
das Diagnose- und Instandhaltungssystem (102) eine Schnittstelle für drahtlose Kommunikation (122) aufweist, um den Verschleißzustand und/oder die prädiktiven Instandhaltungsmeldungen an die Umgebung des Schienenfahrzeugs (100) oder des Lastkraftwagens über die drahtlose Kommunikation (122) zu übermitteln.

## Claims

1. Device for reading out data from a safety-critical control device (108),
**characterised in that**
the device has an auxiliary control unit (110), which can be connected to one safety-critical control device (108) each and is designed such that it can read out the operating and process data required for diagnostic and maintenance purposes from the safety-critical control device (108), wherein
the auxiliary control unit (110) has a first communication interface (112), which forms a data link between the safety-critical control device (108) and the auxiliary control unit (110), and
the auxiliary control unit (110) has a second communication interface (114), with which the operating and process data can be transmitted between the auxiliary control unit (110) and peripheral devices (116),
and wherein the auxiliary control unit (110) has a software module which is designed such that it can prevent the transmission of commands and write requests to the safety-critical control device (108) via the first communication interface (112).

2. Device according to claim 1,
wherein the auxiliary control unit (110) is designed such that only enquiries relating to operating and process data that relate to a diagnosis or maintenance of the safety-critical system are allowed to pass through.

3. Device according to claim 1 or 2,
wherein the first communication interface (112) is a serial interface.

4. Device according to any of the preceding claims,
wherein the auxiliary control unit (110) with the first communication interface (112) is designed as a standardised first communication interface , so that it can be retrofitted to an existing safety-critical control device (108).

5. Device according to any of the preceding claims,
wherein the auxiliary control unit (110) has an electronic assembly having microcontrollers, memories and/or interfaces.

6. Device according to any of the preceding claims,
wherein the auxiliary control unit (110) is designed such that the first communication interface (112) is interrupted at a failure or manipulation of the auxiliary control unit (110).

7. Device according to any of the preceding claims,
wherein the auxiliary control unit (110) is designed such that after a failure or manipulation of the auxiliary control unit (110) a restart is possible only by replacing the auxiliary control unit (110) or by manually resetting the auxiliary control unit (110).

8. Diagnostic and maintenance system (102).
**characterised in that**
the diagnostic and maintenance system (102) has at least one device according to any of claims 1 to 7 for reading out data from a safety-critical control device (108),
wherein the auxiliary control unit (110) of the device is connected to a server (116) of the diagnostic and maintenance system (102) via its second communication interface (114),
and wherein the server (116) is connected to a central processing unit (118) of the diagnostic and maintenance system (102),
wherein operating and process data can be transmitted from the at least one safety-critical control device (108) via the auxiliary control unit (110) and the server (116) to the central processing unit (118),
and wherein the central processing unit (118) is designed such that it can evaluate the operating and process data of the at least one safety-critical control device (108) in order to determine a wear state of a technical system controlled and/or monitored by the safety-critical control device (108) and/or to generate predictive maintenance messages.

9. Diagnostic and maintenance system (102) according to claim 8,
wherein the diagnostic and maintenance system (102) can be located in a rail vehicle (100) or in a heavy goods vehicle, and
the diagnostic and maintenance system (102) has an interface for wireless communication (122) in order to transmit the wear state and/or the predictive maintenance messages to the surroundings of the rail vehicle (100 or the heavy goods vehicle via the wireless communication (122).

## Revendications

1. Dispositif de lecture de données à partir d'un appareil (108) de commande critique du point de vue de la sécurité, **caractérisé en ce que**
le dispositif a un appareil (110) de commande supplémentaire, qui peut être relié à respectivement un appareil (108) de commande critique du point de vue de la sécurité et qui est conformé de manière, à pouvoir lire, à partir de l'appareil (108) de commande critique du point de vue de la sécurité, les données de fonctionnement et de processus nécessaires à des fins de diagnostic et d'entretien, dans lequel
l'appareil (110) de commande supplémentaire a une première interface (112) de communication, qui forme une liaison de données entre l'appareil (108) de commande critique du point de vue de la sécurité et l'appareil (110) de commande supplémentaire, et
l'appareil (110) de commande supplémentaire a une deuxième interface (114) de communication, par laquelle les données de fonctionnement et de processus peuvent être transmises entre l'appareil (110) de commande supplémentaire et des appareils (116) de périphérie,
et dans lequel l'appareil (110) de commande supplémentaire a un module logiciel, qui est conformé de manière à pouvoir empêcher la transmission d'instructions et de demandes d'inscription à l'appareil (108) de commande critique du point de vue de la sécurité par la première interface (112) de communication.

2. Dispositif suivant la revendication 1,
dans lequel l'appareil (110) de commande supplémentaire est conformé de manière à laisser passer seulement des demandes concernant des données de fonctionnement et de processus, qui concernent un diagnostic ou un entretien du système critique du point de vue de la sécurité.

3. Dispositif suivant la revendication 1 ou 2,
dans lequel la première interface (112) de communication est une interface série.

4. Dispositif suivant l'une des revendications précédentes,
dans lequel l'appareil (110) de commande supplémentaire ayant la première interface (112) de communication, sous la forme d'une première interface de communication normalisée, est constituée de manière à pouvoir être rééquipée sur un appareil (108) de commande existant critique du point de vue de la sécurité.

5. Dispositif suivant l'une des revendications précédentes,
dans lequel l'appareil (110) de commande supplémentaire a un module électronique, qui a des micro-unités de commande, des mémoires et/ou des interfaces.

6. Dispositif suivant l'une des revendications précédentes,
dans lequel l'appareil (110) de commande supplémentaire est conformé de manière à interrompre la première interface (112) de communication, s'il se produit une panne ou une manipulation de l'appareil (110) de commande supplémentaire.

7. Dispositif suivant l'une des revendications précédentes,
dans lequel l'appareil (110) de commande supplémentaire est conformé de manière à ce qu'une remise en fonctionnement soit possible, après une panne ou une manipulation de l'appareil (110) de commande supplémentaire, seulement en remplaçant l'appareil (110) de commande supplémentaire ou par remise à l'état initial manuelle de l'appareil (110) de commande supplémentaire.

8. Système(102) de diagnostic et d'entretien,
**caractérisé en ce que**
le système (102) de diagnostic et d'entretien a au moins un dispositif suivant l'une des revendications 1 à 7 de lecture de données à partir d'un appareil (108) de commande critique du point de vue de la sécurité,
dans lequel l'appareil (110) de commande supplémentaire du dispositif est, par sa deuxième interface (114) de communication, relié à un serveur (116) du système (102) de diagnostic et d'entretien,
et dans lequel le serveur (116) est relié à une unité (118) informatique du système (102) de diagnostic et d'entretien,
dans lequel des données de fonctionnement et de processus peuvent être transmises du au moins un appareil (108) de commande critique du point de la sécurité à l'unité (118) informatique, par l'intermédiaire de l'appareil (110) de commande supplémentaire et du serveur (116),
et dans lequel l'unité (118) informatique est conformée de manière à pouvoir exploiter les données de fonctionnement et de processus du au moins un appareil (108) de commande critique du point de vue de la sécurité pour déterminer un état d'usure d'un système technique commandé et/ou contrôlé par l'appareil (108) de commande critique du point de la sécurité et/ou produire des messages prédictifs d'entretien.

9. Système (102) de diagnostic et d'entretien suivant la revendication 8,
dans lequel le système (102) de diagnostic et d'entretien peut être monté dans un véhicule (100) ferroviaire ou dans un camion, et
le système (102) de diagnostic et d'entretien a une interface de communication (122) sans fil, pour transmettre l'état d'usure et/ou des messages prédictifs d'entretien à l'environnement du véhicule (100) ferroviaire ou du camion par l'intermédiaire de la communication (122) sans fil.
